# DEMANDE DE BREVET EUROPEEN

(11) **EP 1 223 200 A1**
(43) Date de publication de la demande: **17.07.2002**
(21) Numéro de dépôt: 01100712.7
(22) Date de dépôt: 12.01.2001
(51) Int. Cl.: C09D 5/14, C08K 5/00, D21H 21/16

(54) **Composition destinée à la protection d'un substrat solide et son utilisation**

(71) Demandeur: Vionnet, Jacques, 1234 Vessy (CH)
(72) Inventeur: Hirsbrunner, Pierre, 1802 Corseaux (CH); Horman, Ian, 1807 Blonay (CH)

(57) **Abrégé**

La présente invention concerne une composition destinée à la protection d'un substrat solide contre toute attaque environnementale, caractérisée en ce qu'elle contient :
- au moins un composé biocide et
- un agent hydrophobant,
ladite composition étant en phase liquide, ledit liquide étant un solvant commun de l'agent hydrophobant et des composés biocides.

## Description

La présente invention concerne une composition destinée à la protection d'un substrat solide et son utilisation.

Il est déjà connu de protéger des substrats solides contre des attaques environnementales à l'aide de biocides, c'est-à-dire des agents permettant de combattre (ou de tuer) des végétaux ou des êtres vivants nuisibles. Le problème des biocides est qu'ils sont normalement solubles dans l'eau et donc s'ils sont soumis aux intempéries, ils vont être dilués ou lessivés et le substrat traité avec ledit biocide sera alors exempt de toute protection.

Le problème à la base de la présente invention est de mettre au point une composition avec laquelle on peut traiter un substrat solide, qui même s'il est soumis aux intempéries conserve sa protection biocide. Le second bénéfice recherché avec la composition selon l'invention est d'obtenir une bonne durabilité de protection du substrat.

La présente invention concerne une composition destinée à la protection d'un substrat solide contre toute attaque environnementale, ladite composition contenant :
- au moins un composé biocide et
- un agent hydrophobant,
ladite composition étant en phase liquide, ledit liquide étant un solvant commun de l'agent hydrophobant et des composés biocides.

Le substrat solide traité avec la composition selon l'invention peut être de tout type soumis à des intempéries, susceptible de subir une attaque environnementale et subir une attaque de rongeurs. Par exemple, le substrat peut être un matériau pierreux, du bois, du textile, des graines ou des produits cellulosiques. Par matériau pierreux dans la présente description, on entend des tuiles, des ouvrages bétonnés, des briques, des grès, des terres cuites, du gravier, du sable, de l'argile expansé et autres. Par bois, dans la présente description, on entend des bois de construction (chêne, du hêtre, sapin), le bois d'agrément (bois spéciaux pour objets d'art, statues) ainsi que des copeaux de bois. Par textile, on entend par exemple de la toile de jute pour emballer les matières brutes, comme le café, le cacao, les céréales, et autres produits alimentaires. Par graines, on entend tout types de graines pour les rongeurs. Par produits cellulosiques, on entend du papier ou du carton.

L'agent hydrophobant est choisi dans le groupe constitué par un alkylsiliconate et un polymère de siloxane. Si on utilise l'alkylsiliconate, le solvant de la composition est l'eau ou un mélange hydroalcoolique, dans le cas du polymère de siloxane le solvant est un mélange hydroalcoolique , de préférence le mélange eau/méthanol ou eau/éthanol. L'alkylsiliconate est de préférence le méthylsiliconate. Le polymère de siloxane est de préférence le polydiméthyl(H)siloxane.

Suivant la finalité de la composition selon l'invention, on peut utiliser différents types de biocides, seuls ou en mélange. Les biocides utilisés sont choisis dans le groupe constitué par un fongicide, un algicide, un insecticide, un rodenticide et un bactéricide.

Pour protéger un substrat pierreux, la composition selon l'invention contient un fongicide comme biocide. Par fongicide dans la présente description, on entend le sorbate de potassium, du cuivre complexé avec de l'éthylène diamine tétracétate (EDTA), lesdits composés pouvant être utilisés seuls ou en mélange. Dans ce cas, l'agent hydrophobant est le méthylsiliconate de potassium en solution aqueuse.

Pour protéger un substrat bois,la composition selon l'invention contient un insecticide et /ou un fongicide. L'insecticide est choisi dans le groupe constitué par les sels et les chélates de métaux actifs (Cu, Cr, Hg), de fluorures, de roténoïde, de pyréthoïdes ou de phénols nitrés ou encore de dérivés chlorés usuels (par ex. DDT). Dans ce cas, l'agent hydrophobant est le polydiméthyl(H)siloxane avec le méthanol/eau comme solvant.

Pour protéger les textiles, par exemple la toile de jute contre les rongeurs, on utilise un mélange de rodenticide, comme la coumarine avec comme hydrophobant le polydiméthyl (H) siloxane.

Pour traiter les graines contre les rongeurs, on utilise un rodenticide avec le même hydrophobant que ci-dessus.

Pour traiter les produits cellulosiques, on utilise un fongicide et/ou un rodenticide avec comme agent hydrophobant le polydiméthyl(H)siloxane.

La présente invention concerne en outre l'utilisation de la composition décrite ci-dessus, dans laquelle on applique ladite composition sur le substrat par traitement topique ou par immersion. Il est préférable de conditionner la composition selon l'invention sous forme concentrée et ensuite de la diluer, de manière à éviter des coûts excessifs de transport.

Lorsque la composition selon l'invention est prête à l'emploi, elle contient de l'ordre de 1-2 % d'agent hydrophobant avec de l'ordre de 100 à 10000 ppm de composé biocide. On applique cette composition de manière à consommer 1 1 pour environ 10 m² de la composition diluée. La composition pénètre normalement sur une épaisseur de l'ordre de 1 à 10 mm dans la pierre et le bois, ce qui garantit une bonne protection et une protection durable du substrat traité.

La suite de la description est faite en référence aux exemples.

### Exemple 1 (Traitement de matériau pierreux)

On dissout 25,3 kg de sorbate de potassium dans 50 kg d'eau chaude. On fait ensuite une suspension d'EDTA et de sulfate de cuivre dans 10 1 d'eau, on ajoute progressivement 3 kg de soude tout en refroidissant le mélange. On mélange le sorbate et la solution de cuivre et on ajuste le volume à 100 1 en y ajoutant de l'eau. On mélange alors avec 1000 kg de méthylsiliconate de potassium de Rhône Poulenc.

Cette préparation est diluée dans l'eau par un facteur 50 et appliquée par spray sur du grès calcaire. Après séchage et réaction, la surface traitée est comparée à une surface référence non-traitée, ceci après une saison d'exposition aux intempéries. La surface non-traitée est humide et colonisée par de nombreuses espèces végétales, alors que la partie traitée ayant subi les mêmes conditions environnementales, est d'un aspect sec et exempte de toute contamination végétale.

### Exemple 2 (Traitement du bois)

Dans 1L d'une émulsion de polydiméthyl(H) siloxane de Rhône Poulenc, on dissout 10g de fluorure de sodium, 20g de complexonate de cuivre, et 0,1g d'alléthrine (Pyréthroïde de synthèse). On prépare séparément une solution de 10g de lindane dans 0,1L de méthanol, que l'on ajoute sous agitation dans la phase aqueuse mentionnée.
Une dilution aqueuse de 2% de la préparation ci-dessus est utilisée pour les tests suivants:
Quatre échantillons/chaque de bois de sapin, de hêtre et de chêne, de dimension 10mm/50mm/50mm sont trempés à saturation dans la dilution mentionnée.
Après séchage les échantillons aquièrent les propriétés hydrophobes souhaitées. Ils sont alors disposés dans une cuve contenant du compost de bois contaminés par des larves de bostriches et des spores de lichens. La température est maintenue à 30° et de l'eau est rajoutée régulièrement pour maintenir une humidité élevée.
Sur une durée de 3 mois, une conservation parfaite, sans aucune altération ni coloration n'a été observée sur les échantillons traités, alors que pour les témoins non-traités, on observe une dégradation marquée (un peu moins pour le chêne) et un très net assombrissemnt de la couleur pour tous les échantillons non-traités.

## Revendications

1. Composition destinée à la protection d'un substrat solide contre toute attaque environnementale, **caractérisée en ce qu'**elle contient :
- au moins un composé biocide et
- un agent hydrophobant,
ladite composition étant en phase liquide, ledit liquide étant un solvant commun de l'agent hydrophobant et des composés biocides.

2. Composition selon la revendication 1, **caractérisée en ce que** le substrat est choisi dans le groupe constitué par un matériau pierreux, du bois, du textile, des graines et des produits cellulosiques.

3. Composition selon l'une des revendications 1 ou 2, **caractérisée en ce que** l'agent hydrophobant est choisi dans le groupe constitué par un alkylsiliconate et un polymère de siloxane.

4. Composition selon l'une des revendications 1 à 3, **caractérisée en ce que** le composé biocide est choisi dans le groupe constitué par un fongicide, un algicide, un insecticide, un rodenticide et un bactéricide.

5. Composition selon l'une des revendications 1 à 4, **caractérisée en ce que** le solvant pour l'alkylsiliconate et pour le polymère de siloxane est l'eau ou un mélange hydroalcoolique.

6. Composition selon l'une des revendications 1 à 5, **caractérisée en ce que** le polymère de siloxane est un polydiméthyl(H)siloxane.

7. Composition selon l'une des revendications 1 à 6, **caractérisée en ce que** l'alkylsiliconate est du méthylsiliconate de potassium.

8. Composition selon l'une des revendications 1 à 7, **caractérisée en ce que** dans le cas du substrat pierreux le biocide est un fongicide.

9. Composition selon l'une des revendications 1 à 7, **caractérisée en ce que** dans le cas du substrat bois le biocide est un insecticide et/ou un fongicide.

10. Composition selon la revendication 8, **caractérisée en ce que** le fongicide est un complexe de cuivre et de l'acide sorbique et l'agent hydrophobant le méthylsiliconate de potassium.

11. Composition selon la revendication 9, **caractérisée en ce que** l'insecticide est un sel ou un chélate de métal actif, un fluorure ou toute autre substance active soluble et l'agent hydrophobant le polydiméthyl(H)siloxane.

12. Utilisation de la composition selon l'une des revendications 1 à 11, **caractérisée en ce qu'**on l'applique sur le substrat par traitement topique ou par immersion.

13. Utilisation selon la revendicaton 12, **caractérisée en ce qu'**on utilise une composition contenant de l'ordre de 1-2 % d'agent hydrophobant avec de l'ordre de 100 à 10000 ppm de composé biocide.
